(19) **Europäisches Patentamt**
**European Patent Office**
**Office européen des brevets**

(11) **EP 1 784 002 A1**

(12) **EUROPEAN PATENT APPLICATION**

(43) Date of publication:
**09.05.2007 Bulletin 2007/19**

(51) Int Cl.:
**H04N 1/60** *(2006.01)* **H04N 1/52** *(2006.01)*

(21) Application number: **06110559.9**

(22) Date of filing: **01.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.11.2005 EP 05110366**

(71) Applicant: **Agfa Graphics N.V.**
**2640 Mortsel (BE)**

(72) Inventors:
• **Mahy, Marc François**
**Agfa Graphics N.V.**
**2640 Mortsel (BE)**

• **Pets, Steven**
**Agfa Graphics N.V.**
**2640 Mortsel (BE)**
• **Livens, Stefan**
**Agfa Graphics N.V.**
**2640 Mortsel (BE)**

(74) Representative: **Goedeweeck, Rudi et al**
**Agfa Graphics N.V.**
**IP Department 3622**
**Septestraat 27**
**2640 Mortsel (BE)**

(54) **Method and apparatus for printer calibration**

(57)   A method provides control over the dynamic range and gradation of a colorant channel in a print system. Instead of calibrating a system in a way that a printable level corresponds with a specified value of a single color component, for example CIE L*, such a system is calibrated so that a printable level corresponds with approximating two or three color components, for example both CIE L* and CIE b*. The approximation uses a distance function. The method achieves better consistency of color performance over time and across several printers of a given type, especially in the presence of printer variability and measurement error. Both a method and a system are described.

FIG. 10

EP 1 784 002 A1

**Description**

FIELD OF THE INVENTION

The present invention relates to an image processing method for rendering color images on a printer. More specifically, the invention relates to method for calibrating a printer.

BACKGROUND OF THE INVENTION

Color printing systems generally rely on subtractive color mixing of a set of colorants to render different colors. A set that is widely used comprises cyan, magenta, yellow and black colorants.

A color separation process separates a color in a digital document into a set of colorant magnitudes that, when printed on top of each other, yield a faithful rendering of said color. A color separation process is usually based on inverting a mathematical printer model that expresses color as a function of printed colorant amounts.

The coefficients of a mathematical printer model are usually obtained by printing and measuring a printer target of which the colorant values are specified. By printing the target and measuring the colors of its patches, the relation between colorant amount and color is known for the colorant combinations of said patches. A typical standard four colorant printer target comprises colorant combinations having magnitudes of 0%, 10%, 20%, 40%, 70% and 100%.

The printer model uses an interpolation technique to predict the colors for other colorant combinations. For example a tetrahedral interpolation technique can be used as presented in the article by Francis Schmitt and Jon Yngve Hardeberg, "Color Printer Characterization Using a Computational Geometry Approach", Proceedings of IS&T and SID's 5th Color Imaging Conference, Pages 96-99, Scottsdale, Arizona, November 1997.

Short and long term variations of a printer are managed by calibrating said printer. The aim of calibration is to bring a printer into a standardized condition, for example corresponding to a reference printer.

According to one prior art method, an output device is calibrated so that the printed density of a colorant as measured with a graphic arts scanner such as the X-Rite 938 varies proportionally with the magnitude of said colorant. Alternatively the calibration can be such that the density varies according to a predefined curve that is not linear.

The document EP-A-1 083 739 teaches that the relation between a colorant magnitude and at least one dimension of the resulting color is preferably substantially uniform on a psychovisual scale. One reason for this is that such an approach minimizes the visibility of quantization noise that results from quantizing a colorant magnitude with a limited number - say eight - bits.

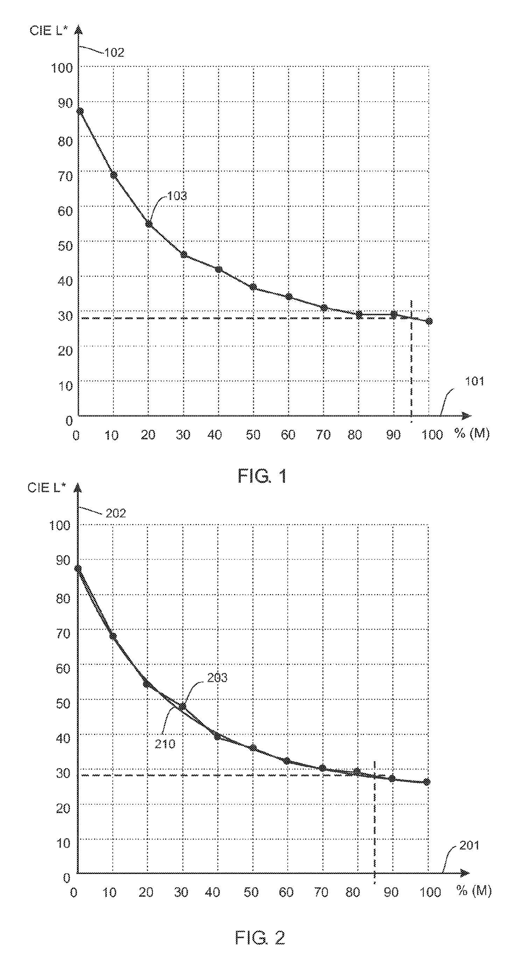

A prior art calibration method involves printing with each single colorant a stepped tone wedge and measuring the CIE L* values of the patches. The CIE L* measurements are used to calculate a calibration curve that yields a linear relation between the magnitude of a single colorant and the CIE L* color component of the printed colorant. Figure 1 shows a set of measurements 103 that indicate the CIE L* value 102 for different colorant magnitudes 101 on a given output device.

In proofing applications it is important to achieve consistent color reproduction over time and across different proofing devices. To accommodate for differences in the dynamic range that can occur over time in a proofing device or between different proofing devices, calibration involves a step of reducing the dynamic range of a proofing device to a range that is consistently achievable.

For example, referring to Figure 1, an output device has a dynamic range from CIE L*=88 down to CIE L*=27. However, because experience may have demonstrated that sometimes this low CIE L* value of 27 is not always achievable, a step in the calibration may involve voluntarily limiting the lower end of the dynamic range to a CIE L* value of for example 28. Referring to Figure 1, this means that the end point of the colorant range is deliberately restricted to 95%, because this colorant magnitude indeed corresponds to a CIE L* value of 28.

A problem in the above prior art technique occurs when the measurements of a color value are affected by local or temporal printer variations, or by measurement error. Referring again to Figure 1, the measurements of the CIE L* values are affected by small stochastic variations. This means that their exact value is uncertain and that, when the same calibration is repeated a next time on the same or on a different proofing device of the same type, the measurement results are likely to be slightly different.

Figure 2 shows another set of measurements of CIE L* measurements 202 as a function of colorant magnitudes 201 for the same or a similar output device as in Figure 1. If the lower end of the dynamic range is to be limited to a CIE L* value of 28 as in the previous assumption, this implies that the end point of the colorant range is to be restricted to 85% instead of to 95% as in the previous case.

This example shows that even small variations on the printed and measured CIE L* values can have a large effect on the way the color magnitude range has to be restricted. This sensitivity results from the low gradient of the CIE L* values as a function of the colorant magnitude in the high end of its range.

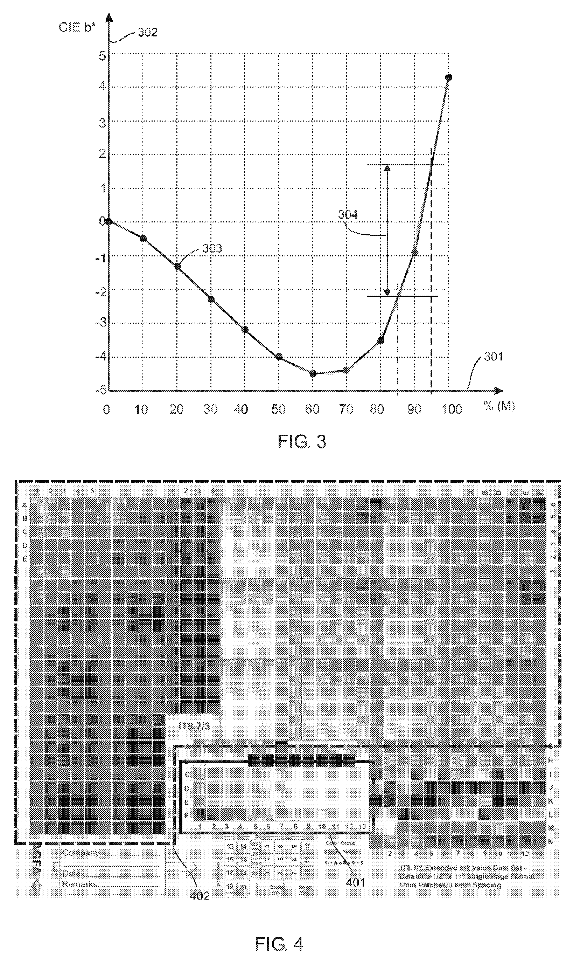

A side effect of a large variation of the lower end of the dynamic range of a colorant is that it may result in a large deviation of a second or a third color component in that range. Figure 3 shows the CIE b* measurements 302 as a function of colorant magnitude 301 for the same printer as in Figure 1 or Figure 2. Figure 3 demonstrates that a change of the end point of the colorant range from 85% to 95%, causes a variation 304 on the b* value of almost 4 CIE deltaE.

So while this change of the end point of a colorant magnitude from 85% to 95% may be desirable to keep the CIE L* value at a constant value of CIE L* of 28, it would also result in a considerable shift of the CIE b* value of the color in the low end of the dynamic density range. As a result, the overall color performance of an output device that is calibrated using this method may be inconsistent.

One solution available to a person skilled in the art to overcome the above problem is to smoothen out the variations due to printer instability or measurement error by fitting an interpolating curve 210 through the measurement points in Figure 2. While this approach often works, it is not full proof, as it does not guarantee that the interpolating curve itself is sufficiently stable and repeatable to avoid the above undesirable effects. When selecting an interpolating function, a trade off usually has to be made between curves that accurately preserve the original measurement data or that are smooth.

While freehand drawing of such a curve is remarkably efficiently accomplished by a human operator, it has been difficult to design a computing strategy that provides universally an optimal compromise between the two above requirements for a wide range of different situations. Practically this means that an interpolating curve either oscillates between the measurement points or locally allows for large deviations.

More substantially, however, an interpolation curve can only smoothen out stochastic variations within a given set of measurement data, but not variations that occur over time or between different output devices.

Clearly a need exists for a more robust calibration technique that is not affected by printer or measurement variations and that preferably keeps not one but all the color components in check.

SUMMARY OF THE INVENTION

According to the current invention, a one-dimensional transformation maps a colorant magnitude onto a reference colorant magnitude whereby said reference colorant magnitude is specified using a reference color having at least two independent color components.

This mapping is realized by an intermediate step in which a reference colorant magnitude is obtained from said reference color by minimizing the color distance between the color corresponding to said reference colorant magnitude and said reference color.

The above-mentioned advantageous effects are realized by a method having the specific features set out in claim 1. Specific features for preferred embodiments of the invention are set out in the dependent claims. Further advantages and embodiments of the present invention will become apparent from the following description and drawings.

BRIEF DESCRIPTION OF THE DRAWINGS

Figure 1 shows a first measured gradation of a CIE L* value as a function of a magenta colorant.

Figure 2 shows a second measured gradation of a CIE L* value as a function of a magenta colorant.

Figure 3 shows a measured gradation of a CIE b* value as a function of a magenta colorant.

Figure 4 shows an output device target.

Figure 5 shows a dynamic range mapping curve for a yellow (Y") colorant.

Figure 6 shows dynamic range mapping curves for both a light (m") and a dark (M") magenta colorant.

Figure 7 shows one aspect of a system according to an embodiment of the current invention, including a gradation calibration stage and a dynamic range calibration stage.

Figure 8 shows a first curve indicating an uncompensated colorant gradation and a second curve indicating a reference colorant gradation.

Figure 9 shows a calibration curve for calibrating an output system so that its output produces a reference gradation.

Figure 10 shows a CIE L*b* diagram indicating a path of measured colors for a set of specified colorant magnitudes.

Figure 11 shows an output system according to the current invention.

DETAILED DESCRIPTION OF THE INVENTION

color and color space

The *color* of an object refers to the way the electromagnetic spectrum that it radiates is perceived by a human observer.

A color can be represented by a *color vector* comprising components of which the magnitudes correspond with the energy magnitudes of a set of primary colors that - when additively mixed - yield visually the same impression to said observer as said color.

It has been demonstrated that a vector having three components is sufficient to represent a color in a unique way to a standard observer. In that case the color space is three-dimensional.

The three components can correspond to a set of three real primaries, such as a red, green and blue primary, or a set of three virtual primaries such as the CIE XYZ primaries. A characteristic of the CIE XYZ set of primaries is that they correspond with the integrated responses as measured through a set of three spectral filters that are linear combinations of the receptor responses of human visual system of a standard observer.

Another approach uses a transformation of the coordinates in said CIE XYZ primary system to obtain a locally psychovisually uniform color space. This document will mainly deal with the locally psychovisually uniform color space CIE L*a*b* to represent colors, although other color spaces can also be used for the invention.

More information on the subject of color spaces is found in the publication "Color Science: concepts and methods, quantitative data and formulae" (2nd ed.) by Wyszecki G. & Stiles W. S. published in 1982 Wiley (New York).

Color appearance models are designed to take into effect the observation that the psychovisual appearance of a color stimulus may be affected by the presence of other visual stimuli. An example of such a color appearance model is the CIECAM02 color space, which expresses colors in terms of three dimensions having a semantic interpretation such as lightness, hue and saturation.

Color spaces are also referred to as *device independent spaces.*

colorant, substrate and colorant space

A *colorant* shall mean a substance that induces a color or modifies the hue of something else by absorbing, reflecting or emitting visible light. The absorption, reflection or emission can be spectrally flat, or it can be spectrally selective.

A colorant can be a conventional pigmented or dyed ink or colorant, but it can also be wax, a water repellent substance, an adhesive or a plastic. Usually a colorant is not a pure compound, but a complex mixture comprising several components such as dyes, pigments, surfactants, binders, fillers, solvents, water and dispersants, each component serving a specific function. The colorant could also be a material of which the viscosity or phase changes with temperature, such as wax. Specifically mentioned also are colorants that polymerize, for example under influence of electromagnetic radiation such as UV light. This process is called curing.

A *colorant magnitude* shall represent an amount of light absorption, reflection or emission. A colorant magnitude can be represented on a scale from 0% to 100%, for example to represent a magnitude of said colorant that ranges from minimum absorption on a substrate to maximum absorption. A colorant magnitude can also be represented using an eight bit word on a scale from 0 to 255, for example corresponding with a range from minimum to maximum emission in the case of a display system. Other possibilities also exist, e.g. colorant magnitudes represented on a 1 bit, a 12 bit or a 16 bit scale.

In this document, colorants having the same hue shall mean that they share the same primary absorption peak as measured by a graphic arts densitometer, such as for example the X-Rite model 530.

In the case of neutral colorants, colorants having the same hue shall mean colorants that have a CIE a* and CIE b* value of which:

$$(CIE\ a*)*(CIE\ a*) + (CIE\ b*)*(CIE\ b*) < 16$$

when said colorants are separately printed on a substrate using the print levels that produce the maximum density on said substrate.

Colorants having the same hue can have the same densities, but preferably have different densities. For example, a first cyan colorant can have a density that is lower than the density of a second cyan colorant.

A *colorant vector* is a vector of which the components are colorant magnitudes. A colorant vector can be represented in a *colorant space* of which the dimensions correspond with the colorant magnitudes.

A *substrate* could be paper, but it could also be textile, a synthetic foil or a metal plate on which colorant is laid down by an output device.

### pixel and image

A *pixel* is a two-dimensional spatial unit to which a color or colorant vector is associated.

An *image* is a spatial two-dimensional arrangement of pixels. Within the scope of this document, an image shall also comprise a sequence of temporally related images, for example for rendering motion pictures or television images. Also comprised are compressed images, i.e. images on which signal processing techniques have been applied to reduce pixel and coding redundancies.

### output device

An output *device* shall mean a hardware device that is capable to render images. In this document, *rendering and printing* shall both refer to the process of rendering an image on an output device, whatever its nature. In this document, the rendering of color by an output device or system shall be referred to as a rendering process, or - in short - a process.

Output devices comprise display and printing devices. Examples of display devices comprise CRT's, LCD's, plasma and projection displays. Most of these devices can render both static and motion pictures. Examples of printing technologies comprise printers for photographic paper, electro-photographic printers, thermal transfer printers, dye sublimation printers, ink jet printers, offset printers, gravure printers and flexographic printers.

An output device can be monochrome or color, depending on its capabilities to render monochrome or color images. A device that is capable to independently vary for each pixel the magnitude of n distinct colorants is said to have an *n-dimensional colorant space,* wherein each dimension corresponds with one of said colorants. Such a device is capable to print a pixel having an n-dimensional colorant vector.

Take for example an offset printing press. Most offset presses are operated using cyan (C), magenta (M), yellow (Y) and black (K) inking stations. The number of colorants and hence the dimensionality of the colorant space is four.

The colorant space that is associated with an output device is sometimes referred to as a *device dependent colorant space,* wherein said device refers to the output device.

### output system

An output system is a system that comprises an output device, but typically also software and hardware peripherals to operate said device, such as printer drivers, color correction and digital halftoning software and the systems they run on.

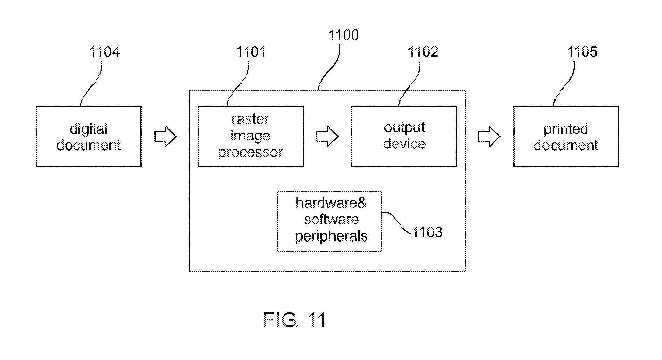

Figure 11 shows a system according to the current invention. The input of a system is a digital document 1104 that is to be converted in a printed document 1105.

Usually this document 1104 is represented in a device independent format such as for example TIFF, PDF®, MS-Word®, or PostScript®.

The system comprises a raster image processor 1101 to transform the digital document 1104 into a raster image having a spatial and tonal resolution and a colorant space.

According to a preferred embodiment, the raster image processor uses a computer program such as for example "Adobe PostScript Printer Driver" commercialized by the company Adobe Systems Incorporated, located in San Jose CA. The raster image processor also comprises a color management system to separate a color vector of an object in a digital input document into a colorant vector represented in said colorant space.

The data from the raster image processor is sent to an output device 1102 for producing the printed document 1105.

The raster image processor 1101 and the output device 1102 are supported by peripheral hardware and software 1103. The raster image processor program preferably runs on a data processing system. The output device 1102 comprises an output device controller to manage the functions of said device.

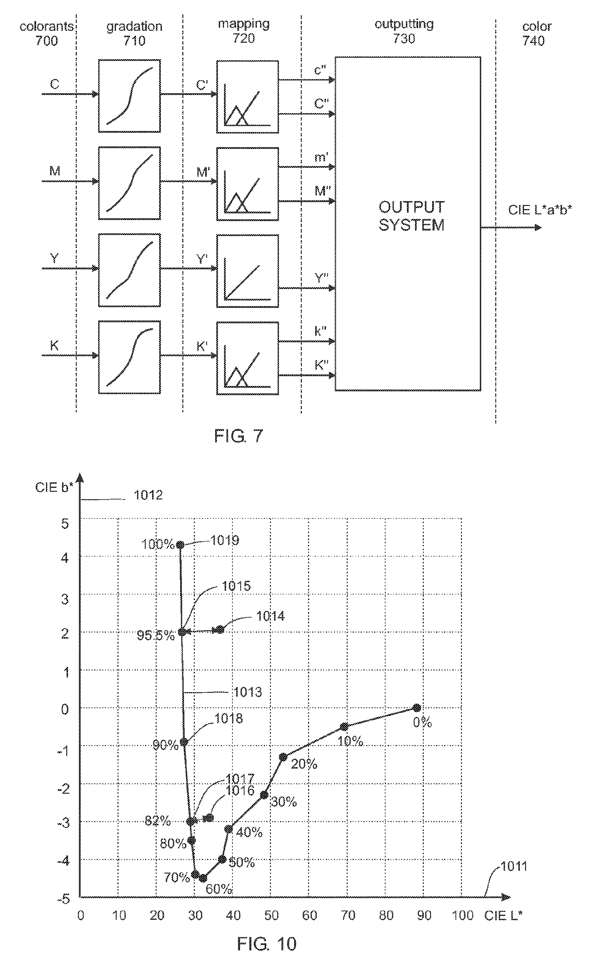

Referring to Figure 7, a colorant channel refers to the image processing and rendering chain that is related to one single colorant.

In the system shown in Figure 7, the conversion of a set of colorant magnitudes (C,M,Y,K) involves preferably first a gradation calibration stage 710 to obtain gradation corrected colorant magnitudes (C',M',Y',K'), followed by dynamic range calibration stage 720 to obtain mapped colorant magnitudes (c",C",m",M",Y",k",K"), followed by an outputting stage 730 to obtain a rendered image.

output device target

An example of an output device target is the IS12642 target (formerly called ANSI IT 8.7/3) shown in Figure 4.

The output device target in Figure 4 comprises step wedges 401 of the pure colorants having colorant magnitudes (0%, 3%, 7%, 10%, 15%, 20%, 25% 30%, 40%, 50%, 60%, 70%, 80%, 90% and 100%) and also colorant combinations having magnitudes of 0%, 10%, 20%, 40%, 70% and 100%.

Description of a calibration method according to the current invention

According to the current invention, a one-dimensional transformation maps a colorant magnitude onto a reference colorant magnitude whereby said reference colorant magnitude is specified using a reference color having at least two independent color components.

This mapping is realized by an intermediate step in which said a reference colorant magnitude is obtained from a reference color by minimizing the color distance between the color corresponding to said reference colorant magnitude and said reference color.

A detailed explanation of how this can be achieved for a single colorant channel is explained in the following paragraphs.

In a first step, preferably a calibration wedge comprising patches is output using a colorant channel of an output system.

The patches are preferably a series of single colorant patches of which the colorant values are specified. An example of a step wedge is the area 401 in the IS12642 output device target in Figure 4. The increments between the colorant magnitudes of the patches are preferably small enough to provide an adequate sampling over the range of a colorant. For example, the colors resulting from two subsequent colorant magnitudes are no more different than 10 CIE deltaE. Alternatively not a step wedge is printed but a continuous wedge that is sampled at positions that correspond with discrete colorant magnitudes.

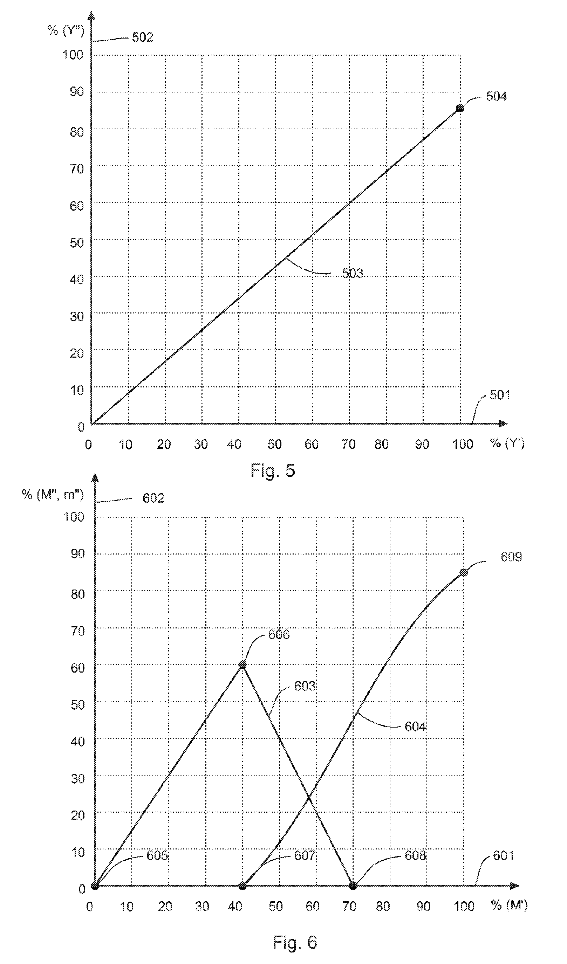

The calibration wedge is output using a default calibration. For example, the initial calibration curves in the gradation calibration stage 710 can be functions that map a value onto itself. They can also be functions that are the result of a previous calibration step. The curves in the dynamic range mapping stage 720 can be factory set curves as for example in Figure 5 or in Figure 6.

In a next step, the output of the calibration wedge is measured, preferably using a colorimeter, such for example the X-Rite 962 0°/45° Portable Spectrophotometer. Other measurement devices are possible, including an automatic measurement table and a data processing system to manage such a table and acquiring, storing and processing the measurement data. If no spectrophotometer is available, a color densitometer can also be used, but this solution is not preferable.

According to one aspect of the current invention, not one but at least two color components are measured. A first color component is for example CIE L* and a second color component is for example the CIE a* or CIE b* color component. Alternatively, the two color components correspond with two density values, for example a density as measured through a neutral density filter and a density as measured through a red, green or blue filter.

A color component can be plotted as a function of colorant values, and by connecting the points obtained from the measurements with line segments, a gradation curve is obtained.

For example, Figure 1 shows a first gradation curve in which the values of CIE L* components are plotted as a function of colorant magnitudes for a magenta colorant.

Also for example, Figure 3 shows a second gradation curve in which the values of CIE b* components are plotted as a function of colorant magnitudes for a magenta colorant.

According to one aspect of the invention, preferably a path is created that connects the colors having a first and at least a second color component for subsequent magnitudes of a colorant.

Referring to Figure 10, a path 1013 connects colors having coordinate pairs CIE L* and CIE b* for subsequent magnitudes of a magenta colorant.

According to one aspect of the current invention, a reference color of a reference gradation is not defined in terms of one single color component as in the prior art calibration techniques, but in terms of at least two color components.

For example, referring to Figure 10, a reference color 1014 is specified using CIE L* and CIE b* color components. This reference color could for example define an end point for the dynamic range of a magenta channel of an output device. Also referring to Figure 10, a reference color 1016 is specified using CIE L* and CIE b* color components. This reference color could for example be an intermediate point of a reference gradation.

According to one aspect of the current invention, a distance function is used to determine a color having color components belonging to said previously defined path that minimizes the distance between said previously specified reference color and said path.

Referring to the example shown in Figure 10, an Euclidian distance function was used that minimizes the distance between a color 1015 on said path and the reference color 1014. Also, the same function was used to find a color 1017 on said path by minimizing the distance with a reference color 1016

An example of a distance function is:

$$\texttt{distance = R*(L}_p\texttt{* - L}_r\texttt{*)*(L}_p\texttt{* - L}_r\texttt{* ) + S*(b}_p\texttt{* - b}_r\texttt{*)*(b}_p\texttt{* - b}_r\texttt{*)}$$

in which:

$(L_p\text{*},b_p\text{*})$ is a color 1015, 1017 belonging to a path 1013;
$(L_r\text{*},b_r\text{*})$ is a reference color of which the coordinates are specified;
R and S are constants, for example R=1 and S=2;

The constants R and S enable to control the weight that is given in the distance function to a deviation in a first dimension, for example CIE L* relative to a second dimension, for example CIE b*.

In the above example, the path and the distance function have been specified in terms of two color components. It should be clear to a person skilled in the art that a similar path, reference color and distance function can equally be specified for three color components, for example CIE L*a*b*.

The colors 1015 and 1017 on the path 1013 can be used to calculate a reference colorant magnitude. This is achieved by interpolating between the two nearest colors for which measurements are available from the output device target.

Referring to Figure 10, the color 1015 lies on a line segment between the colors 1018 and 1019. The color 1018 corresponds with 90% colorant magnitude, the color 1019 with 100% colorant magnitude. By means of interpolation over the length of the line segment, it can be determined that the color 1015 corresponds with 95.5% colorant magnitude.

first embodiment

A first application of the current invention involves calibrating the dynamic range of a colorant channel to a reference dynamic range. A reference dynamic range is for example the dynamic range of a reference output device or system.

This is preferably realized in a dynamic range mapping stage 720 (Figure 7) using a mapping curve as for example demonstrated in Figure 5.

In this Figure 5, a global yellow colorant magnitude Y' is mapped onto a mapped yellow colorant magnitude Y''. The mapping is such that:

-   the 0% magnitude of the yellow colorant Y' is for example mapped onto the 0% magnitude of a mapped yellow colorant Y".
-   the 100% magnitude of the yellow colorant Y' is for example mapped onto the 85% magnitude of a mapped yellow colorant Y''.

For colorant magnitudes in between 0% and 100% linear interpolation is used.

The effect of such a mapping step is that the dynamic range of the yellow colorant channel is effectively reduced. This reduction enables to compensate for the fact that a particular output device may have a dynamic range that is larger than the dynamic range of a reference output device to which behavior said particular output device is calibrated.

In the case of multiple colorants having substantially the same hue, a mapping step preferably includes a mapping of a global colorant magnitude (M') into partial colorant magnitudes for all the partial colorants. Figure 6 shows an example of two mapping curves 603 and 604 that map a global magenta colorant magnitude M' onto a first partial magenta colorant magnitudes (m") and onto a second partial magenta colorant magnitude (M").

In this document, the points 605 to 609 in Figure 6 are called switch points. A switch point is a point where the first derivative of a mapping curve is discontinuous. Typically a switch point corresponds with a global colorant magnitude where a partial colorant magnitude changes from zero to non-zero (or vice versa), or changes from increasing to decreasing (or vice versa). Preferably the global colorant magnitudes of switch points correspond with colorant magnitudes that are specified in a printer target. A special case of a switch point is a begin point, i.e. the point where a curve starts, or an end point, i.e. the point where a curve ends.

Referring to Figure 6, the curves connecting switch points are preferably straight line segments, although they can also be curved line segments as for example the segment 604 between switch points 607 and 609.

According to one aspect of the invention, the dynamic range of an output device is calibrated using the previously described invention. Specifically, a reference color having at least two independent color components is specified and a distance function is used to obtain from said reference color a reference colorant magnitude that is used as a switch point. In one specific embodiment, the switch point is an end point.

By specifying a reference color having at least two components (instead of one as in the prior art method) to define a switch point and using the above embodiment, better consistency of the dynamic range is achieved for an output device or system that is calibrated at different times. Also, better consistency is achieved across multiple output devices and systems of a given type that are calibrated.

second embodiment

Referring to 710 in Figure 7, an embodiment of the current invention involves the calibration of the color gradation of an output device or system to a reference color gradation. A reference color gradation refers to the gradation of for example a reference output device or system.

Specifically, a reference color gradation comprising colors having at least two independent color components is specified and a distance function is used to obtain from said reference gradation a reference colorant magnitude gradation that in a next step can be used to calibrate the gradation of the output device or system.

A point of the reference colorant magnitude gradation is obtained from a color of the color reference gradation, by mapping said color onto a path of measured colors and interpolating between the colorant values that correspond to said measured colors.

Referring to Figure 10, for example, a reference output device produces a color 1016 for a colorant magnitude of 90%. The combination 90% and color 1016 are therefore part of a reference gradation. This color 1016 can be mapped onto a path 1013 of measured colors using a distance function to obtain a color 1017. By means of interpolation, it can be determined that this color 1017 corresponds with a reference colorant magnitude of 82%. This means that a reference colorant magnitude gradation comprises a point (90%,82%). This procedure can be repeated for more colorant - color combinations.

After a reference colorant gradation has been obtained, the method proceeds as follows.

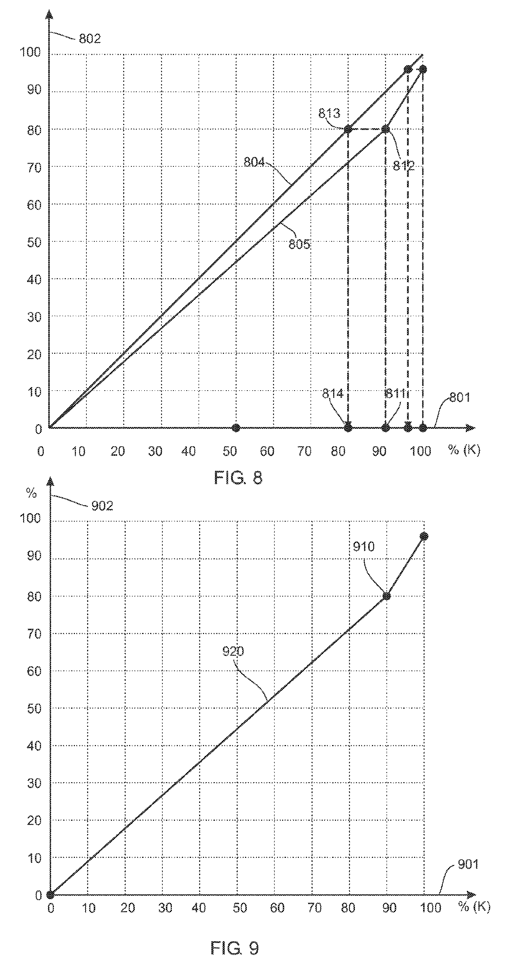

In Figure 8, both the abscissa 801 and the ordinate 802 correspond to colorant magnitudes Curve 804 indicates an uncalibrated gradation of a colorant channel, while curve 805 indicates a reference colorant gradation.

A calibration curve 920 in Figure 9 maps an uncorrected colorant magnitude 901 onto a corrected colorant magnitude 902. Referring to both Figure 8 and 9, a point 910 of said calibration curve 920 is obtained by:

- mapping an uncorrected colorant magnitude 811 parallel to the ordinate axis 802 onto the reference gradation to obtain a reference magnitude 812;
- subsequently mapping said reference magnitude parallel to the abscissa axis 801 onto the measured gradation 804 to obtain a measured magnitude 813:

  - and subsequently mapping this point 813 back onto the abscissa axis 801 to obtain a corrected colorant magnitude 814.

The calibration curve 920 that is obtained this way can be used in a gradation calibration stage 710 in Figure 7.

Referring to Figure 7, a gradation calibration 710 and dynamic range calibration 720 can be implemented using a separate one dimensional transformation for each. Preferably both one-dimensional transformations are concatenated into one single one-dimensional transformation.

A one-dimensional transformation can be implemented in a separate look-up-table step prior to digital halftoning and printing or it can preferably be incorporated in the digital halftoning step itself as explained in EP-B-0639 023 to reduce the loss quantization levels.

Having described in detail preferred embodiments of the current invention, it will now be apparent to those skilled in the art that numerous modifications can be made therein without departing from the scope of the invention as defined in the appending claims. For example, instead of using a distance function a projection technique can be used for minimizing the color distance between the color corresponding to a reference colorant magnitude and a reference color. In that case a line that is perpendicular to the path and that comprises a reference color is constructed. The cross section of said line and the path yields a color that corresponds with a reference colorant magnitude.

**Claims**

1. A method for mapping a colorant magnitude to a reference colorant magnitude using a one-dimensional transformation, the the method **characterized in that** it comprises the steps of:

   - specifying a reference color having at least two independent color components;
   - obtaining said reference colorant magnitude from said reference color by minimizing a distance between a color corresponding to said reference colorant magnitude and said reference color;

2. A method according to the previous claim where said colorant magnitude corresponds to a switch point.

3. A method according to the previous claim where said switch point is an end point.

4. A method according to anyone of the previous claims, further including a printing step.

5. An output system having a colorant channel, said colorant channel mapping a colorant magnitude onto a reference colorant magnitude corresponding to a reference color, the system being **characterized in that**:

   - said reference colorant magnitude corresponds to a color having a minimal distance from said reference color.

6. A printed output from a system according to the previous claim.

7. A data processing system comprising means for carrying out the steps of the method according to any one of the claims 1 to 4.

8. A computer program comprising computer program code means adapted to perform the method according to any one of the claims 1 to 4, when said program is executed on a computer.

9. A computer readable medium comprising program code adapted to carry out the method according to any one of the claims 1 to 4, when executed on a computer.

FIG. 1

FIG. 2

FIG. 3

FIG. 4

Fig. 5

Fig. 6

FIG. 7

FIG. 10

FIG. 8

FIG. 9

1104          1101          1100          1102          1105

| digital document | | raster image processor | | output device | | printed document |

hardware&
software
peripherals ⌐1103

FIG. 11

**European Patent Office** **EUROPEAN SEARCH REPORT**

Application Number

EP 06 11 0559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 083 739 A2 (AGFA GEVAERT [BE]) 14 March 2001 (2001-03-14) * paragraph [0081] - paragraph [0086]; figures 4-6 * | 1-9 | INV. H04N1/60 ADD. H04N1/52 |
| X | MAHY M ET AL: "Towards an optimal design of digital ink jet proofing systems" INTERNATIONAL CONFERENCE ON DIGITAL PRODUCTION PRINTING AND INDUSTRIAL APPLICATIONS. DPP 2005. FINAL PROGRAM AND PROCEEDINGS IS&T: SOCIETY FOR IMAGING SCIENCE AND TECHNOLOGY SPRINGFIELD, VA, USA, [Online] 9 May 2005 (2005-05-09), pages 55-60, XP002413225 ISBN: 0-89208-256-9 Retrieved from the Internet: URL:www.imaging.org> [retrieved on 2007-01-02] * page 56-57, section "Ink Mixing and Calibration" * | 1-9 | |
| X | EP 0 144 188 A (XEROX CORP [US]) 12 June 1985 (1985-06-12) * page 6, line 2 - line 26; figures 1B,4 * | 1,4-9 | TECHNICAL FIELDS SEARCHED (IPC) H04N |
| X | JP 08 307723 A (MINNESOTA MINING & MFG) 22 November 1996 (1996-11-22) * abstract * | 1,4-9 | |
| P,X | -& US 2005/248615 A1 (ONO SATORU [JP]) 10 November 2005 (2005-11-10) * paragraph [0064] - paragraph [0083]; figures 4,5 * | 1,4-9 | |
| X | US 5 877 787 A (EDGE CHRISTOPHER J [US]) 2 March 1999 (1999-03-02) * column 12, line 28 - column 13, line 44; figures 3-5 * | 1,4-9 | |

-/--

The present search report has been drawn up for all claims

| Place of search | Date of completion of the search | Examiner |
|---|---|---|
| Munich | 4 January 2007 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent**

**Office**

**EUROPEAN SEARCH REPORT**

Application Number

EP 06 11 0559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 331 899 B1 (SAMADANI RAMIN [US]) 18 December 2001 (2001-12-18) * column 6, line 37 - line 64; figure 3 * ----- | 1,4-9 | |
| | | | **TECHNICAL FIELDS SEARCHED (IPC)** |

The present search report has been drawn up for all claims

| Place of search | Date of completion of the search | Examiner |
|---|---|---|
| Munich | 4 January 2007 | Seytter, Fritz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 06 11 0559

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2007

| Patent document cited in search report | | Publication date | Patent family member(s) | | Publication date |
|---|---|---|---|---|---|
| EP 1083739 | A2 | 14-03-2001 | EP | 1341371 A2 | 03-09-2003 |
| | | | EP | 1351483 A2 | 08-10-2003 |
| | | | EP | 1343309 A2 | 10-09-2003 |
| EP 0144188 | A | 12-06-1985 | JP | 60135928 A | 19-07-1985 |
| JP 8307723 | A | 22-11-1996 | CA | 2173420 A1 | 02-11-1996 |
| | | | DE | 69615740 D1 | 15-11-2001 |
| | | | DE | 69615740 T2 | 18-04-2002 |
| | | | EP | 0741491 A2 | 06-11-1996 |
| | | | US | 5781206 A | 14-07-1998 |
| | | | US | 5877787 A | 02-03-1999 |
| US 2005248615 | A1 | 10-11-2005 | JP | 2005204053 A | 28-07-2005 |
| US 5877787 | A | 02-03-1999 | CA | 2173420 A1 | 02-11-1996 |
| | | | DE | 69615740 D1 | 15-11-2001 |
| | | | DE | 69615740 T2 | 18-04-2002 |
| | | | EP | 0741491 A2 | 06-11-1996 |
| | | | JP | 8307723 A | 22-11-1996 |
| | | | US | 5781206 A | 14-07-1998 |
| US 6331899 | B1 | 18-12-2001 | AU | 760567 B2 | 15-05-2003 |
| | | | AU | 1443700 A | 01-05-2000 |
| | | | EP | 1110375 A1 | 27-06-2001 |
| | | | WO | 0022813 A1 | 20-04-2000 |

## REFERENCES CITED IN THE DESCRIPTION

### Patent documents cited in the description

- EP 1083739 A

- EP 0639023 B

### Non-patent literature cited in the description

- **FRANCIS SCHMITT ; JON YNGVE HARDEBERG.** Color Printer Characterization Using a Computational Geometry Approach. *Proceedings of IS&T and SID's 5th Color Imaging Conference,* November 1997, 96-99

- **WYSZECKI G. ; STILES W. S.** Color Science: concepts and methods, quantitative data and formulae. Wiley, 1982